# EUROPEAN PATENT SPECIFICATION

(11) **EP 2 679 416 B1**
(45) Date of publication and mention of the grant of the patent: **02.05.2018**
(21) Application number: 12749628.9
(22) Date of filing: 23.02.2012
(51) Int. Cl.: B60G 9/04, B60G 21/055

(54) **TORSION BEAM TYPE SUSPENSION**
VERBUNDLENKERAUFHÄNGUNG
SUSPENSION DE TYPE BARRE DE TORSION

(30) Priority: 25.02.2011 JP 2011040528
(43) Date of publication of application: 01.01.2014
(73) Proprietor: Futaba Industrial Co. Ltd., Okazaki-shi, Aichi 444-8558 (JP)
(72) Inventor: UNO, Takaaki, Okazaki-shi Aichi 444-8558 (JP); KUBOZONO, Satoshi, Okazaki-shi Aichi 444-8558 (JP)
(74) Representative: Faulkner, Thomas John
(86) International application number: PCT/JP2012/054410
(87) International publication number: WO 2012/115186

(56) References cited:
- JP-A- 2002 120 534
- JP-A- 2006 281 885
- JP-A- 2011 088 461
- JP-A- 2011 183 906
- JP-A- 2011 194 963
- US-B1- 6 533 300

## Description

### CROSS-REFERENCE TO RELATED APPLICATIONS

This international application claims the benefit of Japanese Patent Application No.2011-040528 filed February 25, 2011 in the Japan Patent Office.

### TECHNICAL FIELD

The present invention relates to a torsion beam type suspension in which a pair of left and right trailing arms for a vehicle is connected by a torsion beam.

### BACKGROUND ART

Conventionally, regarding a vehicle, a torsion beam type suspension is known in which a pair of left and right trailing arms is connected by a torsion beam. With such torsion beam type suspension, for example as seen from JP 2005-8123, the torsion beam are welded and connected to the left and right trailing arms, and cutouts are formed at both ends of the torsion beam. The cutouts correspond to the cross-sectional shape of the trailing arms so that the trailing arms inserted into the cutouts are welded to the torsion beam. Further, gussets are arranged over the torsion beam and the trailing arms, and the gussets are also formed with cutouts corresponding to the cross-sectional shape of the trailing arms. Thus, the cutouts of both the torsion beam and the gussets each surround half or more of the outer periphery of the trailing arms, whereby the welded length is ensured and strength and durability are satisfied.

In such a conventional one, the gussets are needed to ensure the welded length, and thus the gussets are required to be formed into a shape appropriate for reinforcing. However, this forming is bothersome and leads to increase in the number of components and weight, and the gussets are welded to the trailing arms and the torsion beam, causing a problem of elongation of the welded length.

It is preferable to provide a torsion beam type suspension in which the number of components can be reduced, the welded length can be shortened, and weight saving can be achieved.

US 6,533,300 describes a trailing twist axle in which trailing arms are received in and welded to circular apertures in a torsion bean. The trailing arms must be inserted axially into the apertures in assembly.

According to the present invention there is provided a torsion beam type suspension as claimed in claim 1.

It may be configured such that the inserting position is formed with a groove recessed at the outer periphery of the trailing arm, and the trailing arm is allowed to be inserted into the cutout by aligning the opening of the cutout of the torsion beam to the groove. In this case, the grooves may be formed at upper-side and lower-side of the outer periphery of the trailing arm and approximately in parallel. Further, the joining position and the inserting position may be arranged next to each other. Still further, the both ends of the torsion beam may be configured to expand outwardly in the radial direction of the trailing arm and to be formed with the cutouts.

According to the torsion beam type suspension of the present invention, since the trailing arms are welded
to the torsion beam while the torsion beam surrounds half or more of the outer periphery of each of the trailing arms inserted into the cutouts, it is possible to keep the welded length long. Further, since the torsion beam is connected to the trailing arms without employing gussets, effects can be achieved to reduce the number of components and to reduce in weight.

Forming the grooves at the inserting position of the trailing arm allows the trailing arm to be inserted through the opening of the cutout. Further, the grooves can be formed easily by forming the grooves at the upper side and lower side of the trailing arm and approximately in parallel. Still further, assembling becomes easier by arranging the joining position and the inserting position next to each other. The cutout can be easily formed by expanding the both ends of the torsion beam and by forming the cutout.

### BRIEF DESCRIPTION OF THE DRAWINGS

FIG. 1 is a plan view of a torsion beam type suspension according to an embodiment of the present invention.
FIG. 2 is an enlarged cross-sectional view taken along a line II-II in FIG. 1.
FIG. 3 is a view seen from an arrow III in FIG. 2.
FIGS. 4A-4C are views enlarging major portions of a trailing arm of the embodiment.

### EXPLANATION OF REFERENCE NUMERALS

1, 2...trailing arm, 4...torsion beam, 4a, 4b...side wall, 6, 12...collar, 8, 14...vehicle wheel supporting member, 10, 16...spring receiving member, 18, 20...expanded portion, 22...cutout, 24...opening, 26, 28...groove

### MODE FOR CARRYING OUT THE INVENTION

Hereinafter, an embodiment for carrying out the present invention will be described in detail with reference to the drawings.

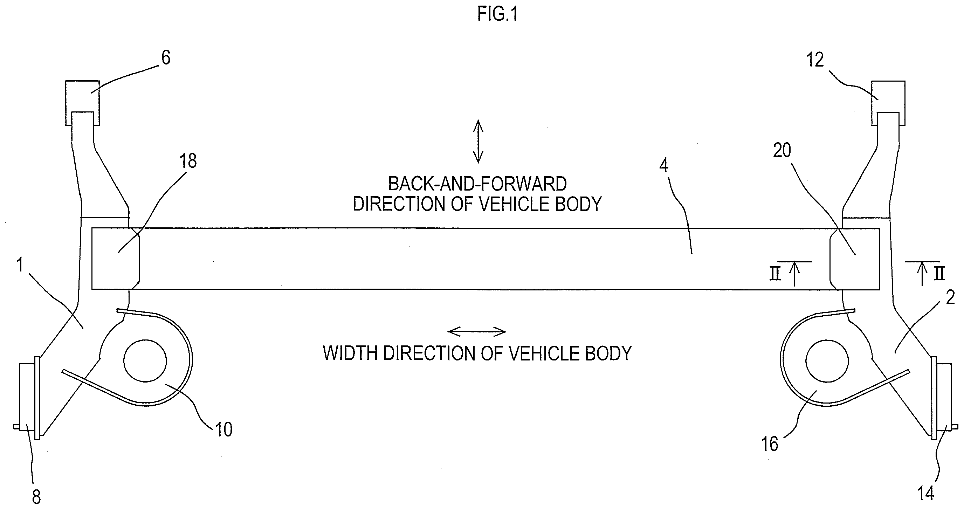

As illustrated in FIG. 1, a torsion beam type suspension of the embodiment of the present invention is configured by connecting a left trailing arm 1 to a right trailing arm 2 by a torsion beam 4 extending in a width direction of a vehicle body perpendicular to a back-and-forward direction of the vehicle body. The trailing arm 1 and the trailing arm 2 are left-right symmetric. The pair of left and right trailing arms 1 and 2 is formed by bending a hollow pipe having a circular shaped cross section.

A collar 6 is attached firmly, by welding, to one end of the left trailing arm 1. The left trailing arm 1 is swingably supported by the not-illustrated vehicle body via the collar 6. Further, a vehicle wheel supporting member 8 is attached firmly, by welding, to the other end of the trailing arm 1. The not-illustrated vehicle wheel is rotatably mounted on the vehicle wheel supporting member 8. Still further, a spring receiving member 10 is attached firmly to the left trailing arm 1 by welding. A coil spring is disposed between the spring receiving member 10 and the not-illustrated vehicle body.

As is the case with the aforementioned left trailing arm 1, also for the right trailing arm 2, a collar 12 is attached to one end of the right trailing arm 2, and a vehicle wheel supporting member 14 is attached firmly, by welding, to the other end of the right trailing arm 2. A spring receiving member 16 is attached firmly, by welding, to the right trailing arm 2.

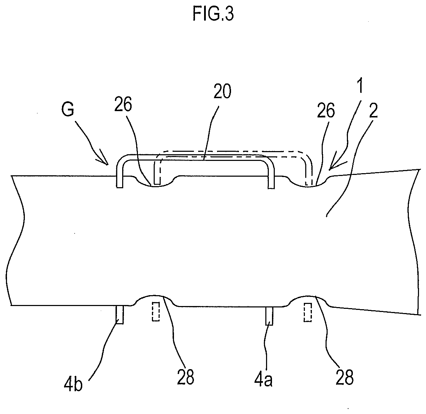

The torsion beam 4 is pressed into an opening cross-sectional shape by folding a plate member. The cross-sectional shape is formed into an approximately U-shape or V-shape, i.e., into a saddle-like shape opening towards the lowerside of the vehicle body (see FIG. 3).

According to the embodiment, expanded portions 18 and 20 are formed at both ends of the torsion beam 4, which bulge outwardly in a radial direction of the trailing arms 1 and 2. The expanded portions 18 and 20 bulge as if expanding outwardly from the outer peripheries of the trailing arms 1 and 2.

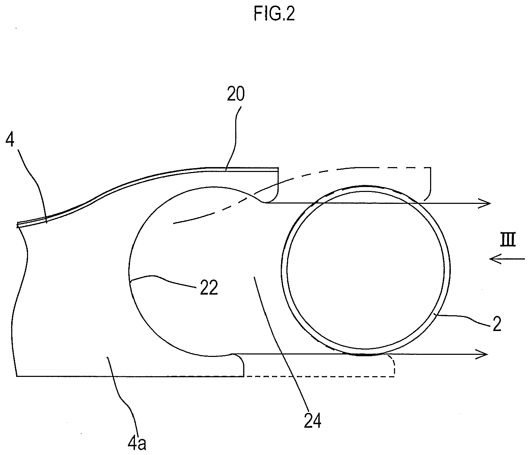

Cutouts 22 are formed at both of the expanded portions 18 and 20 (here, only one of the cutouts 22 being illustrated). As illustrated in FIG. 2, the cutout 22 is formed at the expanded portion 20 of the torsion beam 4 at the side of the right trailing arm 2. The cutout 22 is formed in correspondence to the cross-sectional shape of the trailing arm 2, and, as illustrated in FIG. 3, the cutout 22 is formed penetrating along the axial direction of the trailing arm 2.

According to the embodiment, the torsion beam 4 is formed into an approximately U-shaped cross-sectional shape, and the cutout 22 is formed penetrating both side walls 4a and 4b. The cutout 22 includes an opening 24 formed opening towards the trailing arm 2. The cutout 22 is formed into an approximately arc-shape so that an inner periphery of the cutout 22 comes in contact with the outer periphery of the trailing arm 2, i.e., so that the cutout 22 receives the trailing arm 2, when a joining portion G of the trailing arm 2 is inserted into the cutout 22.

As illustrated in FIG. 3, the trailing arm 2 has the joining position G and an inserting position I. As illustrated in FIG. 1, the joining position G of the trailing arm 2 is a position where both ends of the torsion beam 4 are connected, by welding, to the trailing arms 1 and 2. According to the embodiment, the inserting position I is provided at the trailing arm 2 in the vicinity of the joining position G.

As illustrated in FIG. 3, the inserting position I is formed with grooves 26 and 28. According to the embodiment, two grooves 26 are formed at an upper-side outer periphery of the trailing arm 2, and two grooves 28 are formed at a lower-side outer periphery of the trailing arm 2. The grooves 26 and 28 are arranged approximately in parallel, respectively.

The upper-side grooves 26 and the lower-side grooves 28 are formed at the same relative positions along the axial direction of the trailing arm 2. The interval between the two upper-side grooves 26 is formed to be the same as the interval between the side walls 4a and 4b of the torsion beam 4 having the approximately U-shaped cross section.

The cutout 22 is configured such that the torsion beam 4 surrounds half or more of the outer periphery of the trailing arm 2 in a state where the trailing arm 2 is inserted into the cutout 22 of the torsion beam 4 and then the torsion beam 4 has moved to the joining position G. Accordingly, the opening 24 is formed into a size such that, even if the trailing arm 2 is to be inserted into the cutout 22 through the opening 24, at the joining position G of the trailing arm 2, the end of the torsion beam 4 impacts the outer periphery of the trailing arm 2 and the trailing arm 2 is not able to be inserted.

Further, the interval between the bottom of the upper-side groove 26 and the bottom of the lower-side groove 28 is formed smaller than the clearance of the opening 24. Therefore, it is configured such that the trailing arm 2 is inserted into the cutout 22 from the radial direction by aligning the upper-side and lower-side grooves 26 and 28 to the cutout 22.

Further, it is configured such that the torsion beam 4 is moved to the joining position G by moving the torsion beam 4 in the axial direction of the trailing arm 2 after inserting the trailing arm 2 into the cutout 22. The torsion beam 4 and the trailing arm 2 are connected together by welding along the torsion beam 4 after moving the torsion beam 4 to the joining position G. The same cutout as the cutout 22 at the side of the trailing arm 2 is formed at the end of the torsion beam 4 at the side of the left trailing arm 1. The left trailing arm 1 is also formed with a joining position G and an inserting position I having grooves.

Next described below is a method of assembling the torsion beam type suspension of the embodiment. Regarding the left and right trailing arms 1 and 2, the collars 6 and 12 are welded to the ends thereof, the vehicle wheel supporting members 8 and 14 are welded to the other ends thereof, and the spring receiving members 10 and 16 are welded thereto, respectively. Further, as illustrated in FIGS. 2 and 3, the cutout 22 at the right-side end of the torsion beam 4 is aligned to the grooves 26 and 28 of the inserting position I of the right trailing arm 2, and then the trailing arm 2 is inserted into the cutout 22 through the opening 24 at the grooves 26 and 28.

Then, the torsion beam 4 is moved relatively in the axial direction of the trailing arm 2, and then the cutout 22 of the torsion beam 4 is aligned to the joining position G of the trailing arm 2. Accordingly, the outer periphery of the trailing arm 2 comes into contact with the cutout 22 with no clearance therebetween, and the trailing arm 2 is connected to the torsion beam 4 by welding along the cutout 22. The left trailing arm 1 is connected to the torsion beam 4 by welding in the same manner.

Next, an operation of the torsion beam type suspension of the embodiment will be described. During the vehicle running, when both left and right wheels travel in the same direction and at the same amount relative to the vehicle body, the torsion beam type suspension moves up and down in that orientation and no twisting occurs. However, when the vehicle body inclines, for example, by the centrifugal force applied to the vehicle body and the left and right wheels travel in opposite directions relative to the vehicle body, the torsion beam 4 is twisted and torsional reaction force is generated in proportion to its torsional stiffness.

Stress due to the torsional reaction force is generated at the welded portions between the torsion beam 4 and the trailing arms 1, 2. However, the torsion beam 4 has been welded to half or more of the outer periphery of each of the trailing arms 1 and 2, and it is thus possible to keep the welded length long, and the stress can be spread and generation of an excessive amount of stress due to stress concentration can be inhibited.

As described above, the torsion beam 4 is connected, by welding, to the left and right trailing arms 1 and 2, without employing gussets, thereby enabling to reduce the number of components. Further, the torsion beam 4 can be connected to the trailing arms 1 and 2 maintaining the welded length shorter than the welded length obtained when welding the gussets, thereby enabling to reduce the welded length. Still further, the torsion beam type suspension according to the embodiment can be reduced in weight because gussets are not employed.

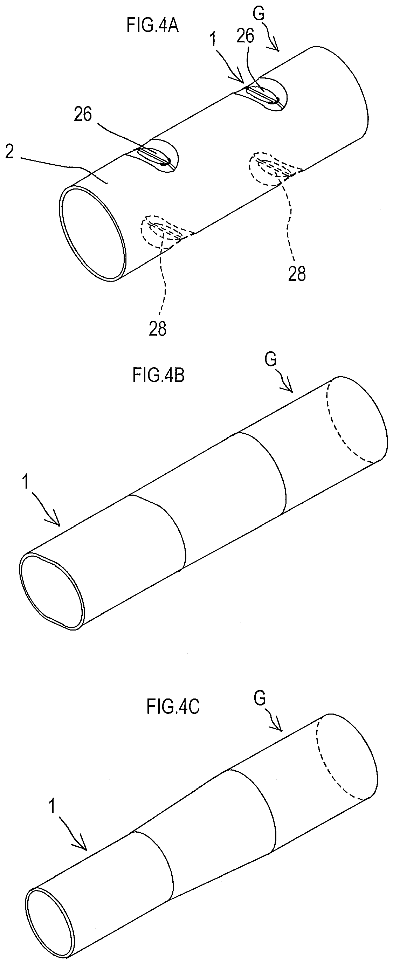

According to the embodiment, a configuration that the grooves 26 and 28 are formed at the inserting position I is employed as an example, as illustrated in FIG. 4A. However, the configuration is not limited to the above and may be such that the trailing arm 2 is inserted into the cutout 22 through the opening 24 without forming the grooves 26 and 28 on the trailing arm 2 and by setting the diameter of the trailing arm 2 smaller than the clearance of the opening 24. In this case, the cross-sectional shape of the inserting position I may be oval, oblong, round, or the like.

The present invention has been described with reference to exemplary embodiments. However, it will be readily apparent to those skilled in the art that it is possible to employ the invention in specific forms other than as described above without departing from the scope of the invention which is defined by the claims.

## Claims

1. A torsion beam type suspension comprising:
a pair of left and right hollow trailing arms (1,2), each of the trailing arms (1,2) swingably supported at one end side of the trailing arm (1,2) by a vehicle body and rotatably supporting a vehicle wheel at the other end side of the trailing arm (1,2);
a torsion beam (4) connecting the pair of left and right trailing arms (1,2),
the torsion beam (4) having at both ends cutouts (22) formed in correspondence to a cross-sectional shape of the trailing arms (1,2), each of the cutouts (22) having an opening (24) configured to receive a corresponding trailing arm of the trailing arms (1,2),
the trailing arm (1,2) having a joining position (G) to which the torsion beam (4) is connected by welding and an inserting position (I) where the trailing arm (1,2) is allowed to be inserted into the cutout (22) through the opening (24),
the opening (24) being configured to be a size such that, when the torsion beam (4) is located at the joining position (G), the torsion beam (4) surrounds half or more of an outer periphery of the trailing arm (1,2) inserted into the cutout (22) and the trailing arm (1,2) is not allowed to be inserted into the opening (24) of the cutout (22) from a radial direction of the trailing arm (1,2),
**characterised by** the torsion beam type suspension further comprising upper-side and lower-side grooves (26, 28) and the opening (24) being arranged such that, when the torsion beam (4) is located at the inserting position (I), the trailing arm (1,2) is connectable to the torsion beam (4) by inserting the trailing arm (1,2) through the opening (24) of the cutout (22) by moving the trailing arm relative to the torsion beam (4) in a radial direction of the trailing arm (1,2), by aligning the upper-side and lower-side grooves (26) and (28) to the cutout (22), then moving the torsion beam (4) relative to the trailing arm (1,2) along an axial direction of the trailing arm (1,2), and then welding at the joining position (G).

2. The torsion beam type suspension according to claim 1, wherein the inserting position (I) is formed with grooves (26,28) recessed at the outer periphery of the trailing arm (1,2), and the trailing arm (1,2) is allowed to be inserted into the cutout (22) by aligning the opening (24) of the cutout (22) of the torsion beam (4) to the grooves (26,28).

3. The torsion beam type suspension according to claim 2, wherein the grooves (26,28) are formed at upper-side and lower-side of the outer periphery of the trailing arm (1,2) and approximately in parallel.

4. The torsion beam type suspension according to any one of claims 1 to 3, wherein the joining position (G) and the inserting position (I) are arranged next to each other.

5. The torsion beam type suspension according to any one of claims 1 to 4, wherein the both ends of the torsion beam (4) bulge outwardly in the radial direction of the trailing arm (1,2) and are formed with the cutouts (22).

## Patentansprüche

1. Verbundlenkeraufhängung, die aufweist:
ein Paar linker und rechter hohler Längsschwingen (1, 2), wobei jede der Längsschwingen (1, 2) an einer Endseite der Längsschwinge (1, 2) von einem Fahrzeugkörper schwenkbar abgestützt ist und ein Fahrzeugrad an der anderen Endseite der Längsschwinge (1, 2) drehbar abstützt;
einen Torsionsträger (4), der das Paar linker und rechter Längsschwingen (1, 2) verbindet,
wobei der Torsionsträger (4) an beiden Enden Ausschnitte (22) hat, die entsprechend einer Querschnittsform der Längsschwingen (1, 2) geformt sind, wobei jeder der Ausschnitte (22) eine Öffnung (24) hat, die gestaltet ist, um eine entsprechende Längsschwinge der Längsschwingen (1, 2) aufzunehmen,
wobei die Längsschwinge (1, 2) eine Verbindungsstelle (G), mit der der Torsionsträger (4) durch Schweißen verbunden ist, und eine Einführungsstelle (I) hat, wo die Längsschwinge (1, 2) in den Ausschnitt (22) durch die Öffnung (24) eingeführt werden kann,
wobei die Öffnung (24) gestaltet ist, um von einer derartigen Größe zu sein, dass wenn der Torsionsträger (4) an der Verbindungsstelle (G) platziert ist, der Torsionsträger (4) die Hälfte oder mehr eines äußeren Randes der in den Ausschnitt (22) eingeführten Längsschwinge (1, 2) umgibt und die Längsschwinge (1, 2) nicht in die Öffnung (24) des Ausschnittes (22) von einer radialen Richtung der Längsschwinge (1, 2) aus eingeführt werden kann,
**dadurch gekennzeichnet, dass** die Verbundlenkeraufhängung ferner oberseitige und unterseitige Rillen (26, 28) aufweist und
die Öffnung (24) derart ausgeführt ist, dass wenn der Torsionsträger (4) an der Einführungsstelle (I) platziert ist, die Längsschwinge (1, 2) mit dem Torsionsträger (4) durch Einführen der Längsschwinge (1, 2) durch die Öffnung (24) des Ausschnittes (22) durch Bewegen der Längsschwinge relativ zu dem Torsionsträger (4) in einer radialen Richtung der Längsschwinge (1, 2), durch Ausrichten der oberseitigen und unterseitigen Rillen (26) und (28) auf den Ausschnitt (22), dann Bewegen des Torsionsträgers (4) relativ zu der Längsschwinge (1, 2) entlang einer axialen Richtung der Längsschwinge (1, 2) und dann Schweißen an der Verbindungsstelle (G) verbindbar ist.

2. Verbundlenkeraufhängung nach Anspruch 1, bei der die Einführungsstelle (I) mit Rillen (26, 28) ausgebildet ist, die an dem äußeren Rand der Längsschwinge (1, 2) ausgespart sind, und die Längsschwinge (1, 2) in den Ausschnitt (22) durch Ausrichten der Öffnung (24) des Ausschnittes (22) des Torsionsträgers (4) auf die Rillen (26, 28) eingeführt werden kann.

3. Verbundlenkeraufhängung nach Anspruch 2, bei der die Rillen (26, 28) an der Oberseite und der Unterseite des äußeren Randes der Längsschwinge (1, 2) gebildet und annähernd parallel sind.

4. Verbundlenkeraufhängung nach irgendeinem der Ansprüche 1 bis 3, bei der die Verbindungsstelle (G) und die Einführungsstelle (I) nebeneinander angeordnet sind.

5. Verbundlenkeraufhängung nach irgendeinem der Ansprüche 1 bis 4, bei der sich die beiden Enden des Torsionsträgers (4) auswärts in radialer Richtung auf die Längsschwinge (1, 2) hin wölben und mit Aussparungen (22) ausgeformt sind.

## Revendications

1. Suspension de type barre de torsion comprenant :
une paire de bras oscillants creux gauche et droit (1, 2), chacun des bras oscillants (1, 2) étant supporté en oscillation au niveau d'un côté d'extrémité du bras oscillant (1, 2) par une carrosserie de véhicule et supportant en rotation une roue de véhicule au niveau de l'autre côté d'extrémité du bras oscillant (1, 2) ;
une barre de torsion (4) raccordant la paire de bras oscillants gauche et droit (1, 2), la barre de torsion (4) présentant aux deux extrémités des découpes (22) formées en correspondance avec une forme en coupe transversale des bras oscillants (1, 2), chacune des découpes (22) présentant une ouverture (24) configurée pour recevoir un bras oscillant correspondant des bras oscillants (1, 2),
le bras oscillant (1, 2) ayant une position de raccordement (G) à laquelle la barre de torsion (4) est raccordée par soudage et une position d'insertion (I) où le bras oscillant (1, 2) peut être inséré dans la découpe (22) à travers l'ouverture (24),
l'ouverture (24) étant configurée pour être d'une taille telle que, quand la barre de torsion (4) est placée à la position de raccordement (G), la barre de torsion (4) entoure la moitié ou plus d'une périphérie externe du bras oscillant (1, 2) inséré dans la découpe (22) et le bras oscillant (1, 2) ne peut pas être inséré dans l'ouverture (24) de la découpe (22) depuis une sens radial du bras oscillant (1, 2),
**caractérisé en ce que** la suspension de type barre de torsion comprend en outre des rainures côté supérieur et côté inférieur (26, 28) et
l'ouverture (24) étant agencée de telle sorte que, quand la barre de torsion (4) est placée à la position d'insertion (I), le bras oscillant (1, 2) peut être connecté à la barre de torsion (4) en insérant le bras oscillant (1, 2) à travers l'ouverture (24) de la découpe (22) en déplaçant le bras oscillant par rapport à la barre de torsion (4) dans un sens radial du bras oscillant (1, 2), en alignant les rainures côté supérieur et côté inférieur (26) et (28) avec la découpe (22), puis en déplaçant la barre de torsion (4) par rapport au bras oscillant (1, 2) le long d'un sens axial du bras oscillant (1, 2), puis en soudant au niveau de la position de raccordement (G).

2. Suspension de type barre de torsion selon la revendication 1, dans laquelle la position d'insertion (I) est formée avec des rainures (26, 28) en renfoncement au niveau de la périphérie externe du bras oscillant (1, 2), et le bras oscillant (1, 2) peut être inséré dans la découpe (22) en alignant l'ouverture (24) de la découpe (22) de la barre de torsion (4) avec les rainures (26, 28).

3. Suspension de type barre de torsion selon la revendication 2, dans laquelle les rainures (26, 28) sont formées au niveau d'un coté supérieur et d'un côté inférieur de la périphérie externe du bras oscillant (1, 2) et approximativement en parallèle.

4. Suspension de type barre de torsion selon l'une quelconque des revendications 1 à 3, dans lequel la position de raccordement (G) et la position d'insertion (I) sont agencées l'une à côté de l'autre.

5. Suspension de type barre de torsion selon l'une quelconque des revendications 1 à 4, dans lequel les deux extrémités de la barre de torsion (4) font saillie vers l'extérieur dans le sens radial du bras oscillant (1, 2) et sont formées avec les découpes (22).
